# EUROPEAN PATENT SPECIFICATION

(11) **EP 3 632 708 B1**
(45) Date of publication and mention of the grant of the patent: **27.01.2021**
(21) Application number: 19200406.7
(22) Date of filing: 30.09.2019
(51) Int. Cl.: B60C 15/06, B60C 19/00

(54) **TIRE**
REIFEN
PNEUMATIQUE

(30) Priority: 03.10.2018 JP 2018188133
(43) Date of publication of application: 08.04.2020
(73) Proprietor: Toyo Tire Corporation, Itami-shi, Hyogo 664-0847 (JP)
(72) Inventor: HOSOMI, Kazumasa, Itami-shi, Hyogo 664-0847 (JP)
(74) Representative: Müller-Boré & Partner Patentanwälte PartG mbB

(56) References cited:
- EP-A1- 0 505 905
- US-A- 4 911 217
- US-B1- 6 192 951
- US-B1- 6 339 956

## Description

### BACKGROUND OF THE INVENTION

### Field of the Invention

The present invention relates to a tire into which an electronic component is embedded.

### Related Art

Conventionally, a tire embedding an electronic component such as an RFID tag has been known. With such a tire, it is possible to carry out production management of the tire, usage history management, etc. by the RFID tag embedded in the tire and a reader as external equipment carrying out communication. For example, Patent Document 1 discloses a tire embedding an RF tag in the vicinity of a stiffener.

Patent Document 1: Japanese Unexamined Patent Application, Publication No. 2016-37236

Document EP 0505905 describes a pneumatic tire having an integrated circuit transponder which, upon interrogation by an external RF signal, transmits tire identification and/or other data in digitally coded form. The transponder has a coil antenna of small enclosed area as compared to the area enclosed by an annular tensile member comprising a bead of the tire. The annular tensile member, during transponder interrogation, acts as the primary winding of a transformer. The coil antenna is loosely coupled to the primary winding and is the secondary winding of the transformer. The coil antenna is substantially planar in shape, and, when positioned between the inner liner of the tire and its carcass ply, the transponder may include a pressure sensor responsive to tire inflation pressure.

Document US 4,911,217 describes a combination of a pneumatic tire and an integrated circuit transponder located within the structure of the tire. The integrated circuit transponder is a passive device in that it has no source of electrical energy but instead depends upon the receipt of an "interrogation" signal emanating from a source outside of the tire. The interrogation signal is rectified by the integrated circuit transponder, which then utilizes the rectified signal as a source of electrical energy for use in its transmission of an electrical signal digitally encoded to identify the tire. A unique code can be used for each tire.

Document US 6,192,951 describes a pneumatic radial tire which comprises a bead filler disposed on an outer periphery of an annular bead core; a carcass layer formed by arraying a plurality of steel cords in a tire radial direction, an end part thereof being turned up from the inside of the tire to the outside around the bead core; a steel reinforcing material wrapping around the bead core with the carcass layer interposed, and a bar-shaped transponder buried in an area separated from metallic components of a bead section in the bead filler so as to set a longitudinal direction thereof in a tire circumferential direction, the area being closer to the bead core than a turned-up end of the carcass layer in a turned-up side of the carcass layer, and closer to the bead core than an inner wrapping end of the steel reinforcing material in a main body side of the carcass layer.

Document US 6,339,956 describes a pneumatic vehicle tire including a carcass, a bead with a bead core arranged in the bead, and a first sensor located within the bead. The first sensor delivers signals which are correlated to frictional forces transmitted by the pneumatic vehicle tire during operation. This sensor has a first end and a second end, wherein the first end includes a heel attached to the bead core and the second end extends radially outward from the bead core within the tire. A plurality of such sensors can be included in each tire, some for measuring longitudinal forces in a circumferential direction of the tire and others for measuring lateral forces in an axial direction of the tire.

### SUMMARY OF THE INVENTION

However, in the technology shown in Patent Document 1, the RF tag is arranged between a stiffener and side rubber, and no fiber layer such as a carcass ply is present between the RF tag and tire outer wall. Consequently, there is concern over the RF tag not being protected and becoming damaged in a case of the tire greatly distorting or a case of shock acting on the tire.

In addition, with the technology shown in Patent Document 1, the RF tag is arranged in the vicinity of a stiffener adjacent to the bead core made of metal. Consequently, the communication state of electronic devices such as an RF tag having a communication function is influenced by the bead core made of metal and becomes unstable, and there is a possibility of no longer being able to exhibit the original function of the electronic device.

The present invention has been made taking account of the above-mentioned problem, and a first object thereof is to provide a tire capable of protecting an electronic component, even in a case of the tire greatly distorting or shock acting on the tire.

In addition, the present invention has been made taking account of the above-mentioned problem, and a second object thereof is to provide a tire which can keep the performance of an electronic component, by arranging the electronic device at a position distanced from components made of metal.

A tire (for example, the tire 1) according to the present invention includes: a pair of beads (for example, the bead 11) having a bead core (for example, the bead core 21) and a bead filler (for example, the bead filler 22) which extends to an outer side in a tire-radial direction of the bead core; and a carcass ply (for example, the carcass ply 23) which extends from one bead to an other bead, and is folded back around the bead core, in which the bead filler is formed by a plurality of filler pieces, and an electronic component (for example, the RFID tag 40) is interposed between one filler piece (for example, the filler piece 22B) and another filler piece (for example, the filler piece 22C) which are adjacent, whereby the electronic component is embedded inside of the bead filler.

According to the present invention, the electronic component is disposed to an outer side in a tire-radial direction separated by at least 10 mm from the bead core.

The electronic component may be embedded in an area range of 10 mm to an inner side in the tire-radial direction from a tire-radial direction outside end of the bead filler.

The electronic component which has been covered by a rubber sheet may be embedded.

The electronic component without covering may be embedded. The electronic component may be disposed so that a longitudinal direction thereof becomes a direction of a tangential line to the circumferential direction of the tire.

According to the present invention, it is possible to to provide a tire capable of protecting an electronic component, even in a case of the tire greatly distorting or shock acting on the tire.

In addition, according to the present invention, it is possible to provide a tire which can keep the performance of an electronic component, by arranging the electronic device at a position distanced from components made of metal.

### BRIEF DESCRIPTION OF THE DRAWINGS

FIG. 1 is a view showing a half section in a tire-width direction of a tire according to an embodiment of the present invention;
FIG. 2 is a partially enlarged cross-sectional view of the tire in FIG. 1;
FIG. 3 is a view showing a modified example of a tire according to an embodiment of the present invention, which is a half section in a tire-width direction;
FIG. 4 is a partially enlarged cross-sectional view of the tire in FIG. 3;
FIG. 5 is a view showing a relationship between a distance between a bead wire and RFID tag and the communication range;
FIG. 6A is a view showing an RFID tag protected by a protective member in a tire according to an embodiment of the present invention;
FIG. 6B is a view showing a cross-section along the line b-b in FIG. 6A; and
FIG. 6C is a view showing a cross-section along the line c-c in FIG. 6A.

### DETAILED DESCRIPTION OF THE INVENTION

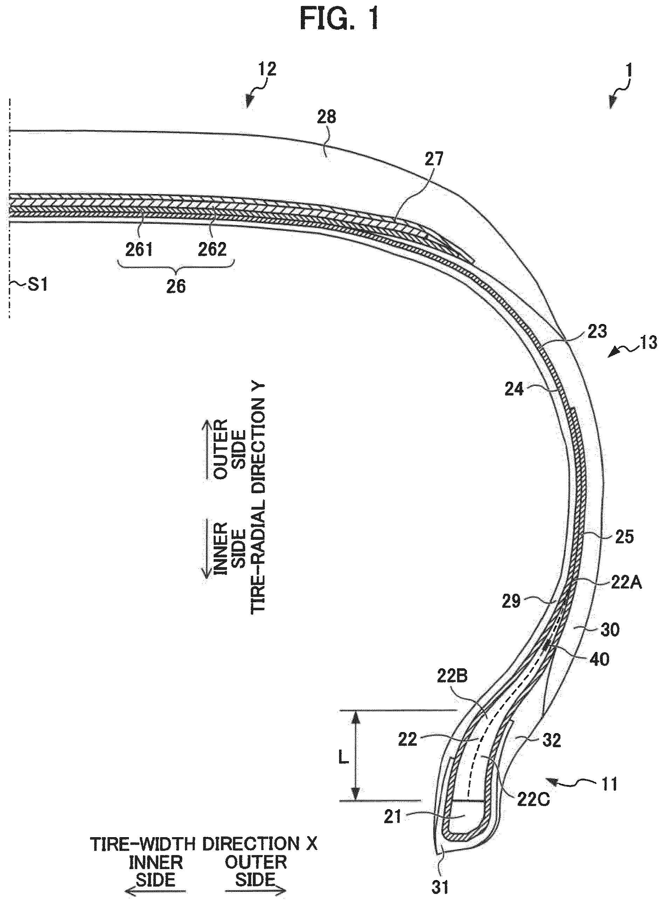

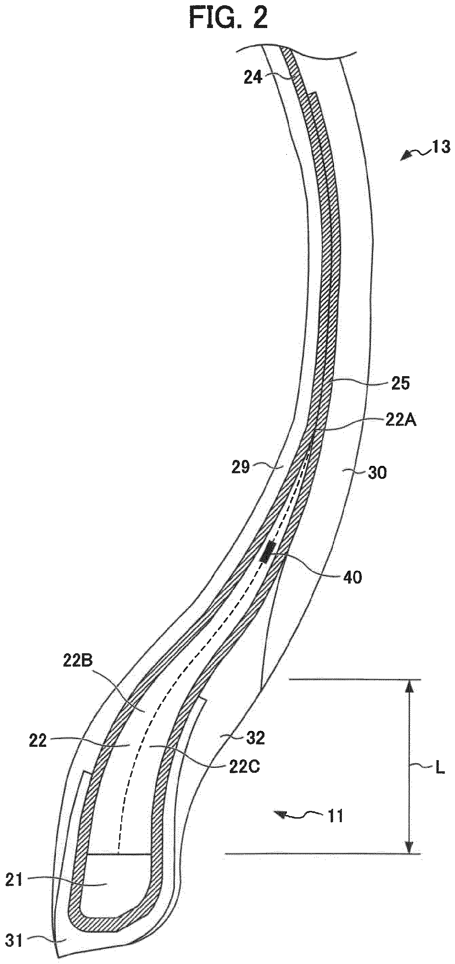

Hereinafter, an embodiment of the present invention will be explained while referencing the drawings. FIG. 1 is a view showing a half section in a tire-width direction of a tire 1 according to the present embodiment. The basic structure of the tire is left/right symmetric in the cross section of the tire-width direction; therefore, a cross-sectional view of the right half is shown herein. In the drawings, the reference symbol S1 is the tire equatorial plane. The tire equatorial plane S1 is a plane orthogonal to the tire rotation axis, and is positioned in the center of the tire-width direction. Herein, tire-width direction is a direction parallel to the tire rotation axis, and is the left/right direction of the paper plane of the cross-sectional view in FIG. 1. In FIG. 1, it is illustrated as the tire-width direction X. Then, inner side of tire-width direction is a direction approaching the tire equatorial plane S1, and is the left side of the paper plane in FIG. 1. Outer side of tire-width direction is a direction distancing from the tire equatorial plane S1, and is the right side of the paper plane in FIG. 1. In addition, tire-radial direction is a direction perpendicular to the tire rotation axis, and is the vertical direction in the paper plane of FIG. 1. In FIG. 1, it is illustrated as the tire-radial direction Y. Then, outer side of tire-radial direction is a direction distancing from the tire rotation axis, and is the upper side of the paper plane in FIG. 1. Inner side of tire-radial direction is a direction approaching the tire rotation axis, and is the lower side of the paper plane in FIG. 1. The same also applies to FIGS. 2 to 4.

The tire 1 is a tire for passenger cars, for example, and includes a pair of beads 11 provided at both sides in the tire-width direction, a tread 12 forming the contact patch with the road surface, and a pair of side walls 13 extending between the pair of beads 11 and the tread 12, as shown in FIG. 1.

The bead 11 includes an annular bead core 21 formed by wrapping around several times bead wires made of metal coated with rubber, and a bead filler 22 of tapered tip shape extending to the outer side in the tire-radial direction of the bead core 21. The bead core 21 is a member which plays a role of fixing a tire filled with air to the rim of a wheel which is not illustrated. The bead filler 22 is a member provided in order to raise the rigidity of the bead peripheral part and to ensure high maneuverability and stability, and is configured from high-modulus rubber of a higher modulus than the surrounding rubber members, for example.

A carcass ply 23 constituting a ply serving as the skeleton of the tire is embedded inside of the tire 1. The carcass ply 23 extends from one bead core to the other bead core. In other words, it is embedded in the tire 1 between the pair of bead cores 21, in a form passing through the pair of side walls 13 and the tread 12. The carcass ply 23 includes a ply body 24 which extends from one bead core to the other bead core, and extends between the tread 12 and bead 11, and a ply folding part 25 which is folded around the bead core 21. The carcass ply 23 is configured by a plurality of ply cords extending in the tire-width direction. In addition, a plurality of ply cords is arranged side by side in a tire circumferential direction. This ply cord is configured by an insulated organic fiber cord such as polyester or polyamide, or the like, and is covered by rubber.

In the tread 12, at least one ring-shaped steel belt 26 which extends in a circumferential direction of the tire is provided in the outer side in the tire-radial direction of the carcass ply 23. The steel belt 26 is configured by a plurality of steel cords covered by rubber. By providing the steel belts 26, the rigidity of the tire is ensured, and the contact state of the road surface with the tread 12 improves. In the present embodiment, although two layers of steel belts 261, 262 are provided, the number of layered steel belts 26 is not limited thereto.

At the outer side in the tire-radial direction of the steel belt 26, a cap ply 27 serving as a belt reinforcement layer is provided. The cap ply 27 is configured from an insulating organic fiber layer such as of polyamide fibers, and is covered by rubber. By providing the cap ply 27, it is possible to achieve an improvement in durability and a reduction in road noise while travelling.

The tread rubber 28 is provided at the outer side in the tire-radial direction of the cap ply 27. A tread pattern (not illustrated) is provided to the outer surface of the tread rubber 28, and this outer surface serves as a contact patch which contacts with the road surface.

In the bead 11, side wall 13 and tread 12, an inner liner 29 serving as a rubber layer constituting an inside wall surface of the tire 1 is provided to a tire inner cavity side of the carcass ply 23. The inner liner 29 is configured by air permeation resistant rubber, whereby the air inside the tire inner cavity is prevented from leaking to outside.

In the side wall 13, the side wall rubber 30 constituting the outer wall surface of the tire 1 is provided to the outer side in the tire-width direction of the carcass ply 23. This side wall rubber 30 is a portion which bends the most upon the tire 1 exhibiting a cushioning action, and usually flexible rubber having fatigue resistance is adopted therein.

A chafer 31 is provided on the inner side in the tire-radial direction of the carcass ply 23 provided around the bead core 21 of the bead 11. The chafer 31 also extends to the outer side in the tire-width direction of the ply folding part 25 of the carcass ply 23, and rim strip rubber 32 is provided at the outer side in the tire-width direction thereof and the inner side in the tire-radial direction. The outer side in the tire-width direction of this rim strip rubber 32 connects with the side wall rubber 30.

An RFID tag 40 is embedded as an electrical component in the tire 1 of the present embodiment. The RFID tag 40 is a passive transponder equipped with an RFID chip and an antenna for performing communication with external equipment, and performs wireless communication with a reader (not illustrated) serving as the external equipment. As the antenna, a coil-shaped spring antenna, plate-shaped antenna, and various types of rod-shaped antennas can be used. For example, it may be an antenna formed by printing a predetermined pattern on a flexible substrate. In a storage part inside the RFID chip, identification information such as a manufacturing number and part number is stored.

As shown in FIGS. 1 and 2, the RFID tag 40 is provided in a form embedded inside of the bead filler 22.

In addition, the RFID tag 40 of the present embodiment is embedded inside of the bead filler 22 by interposing by the one filler piece 22B and another filler piece 22C which are the same material of the bead filler 22. In other words, in the present embodiment, the bead filler 22 is divided into a plurality, and the RFID tag 40 is provided so as to be interposed between adjacent filler pieces 22B, 22C. At this time, due to being embedded inside of the bead filler 22 of high modulus, the RFID tag 40 may be in a state covered by the rubber sheet, or a state not covered thereby.

Furthermore, in the present embodiment, as shown in FIGS. 1 and 2, the RFID tag 40 is provided to be separated by at least 10 mm (separation of at least reference symbol L) to an outer side in the tire-radial direction from the bead core 21. Preferably, it is provided to be separated by at least 20 mm (L). More preferably, the RFID tag 40 is embedded within the bead filler 22 in the vicinity of a tire-radial direction outside end 22A.

In other words, the bead core 21 is formed in a ring shape by winding in layers of metal bead wires, and thus is a metal member having a particularly high possibility of adversely influencing communication; therefore, in the present embodiment, it is made possible to ensure favorable communicability with a reader by arranging the RFID tag 40 in the above-mentioned way.

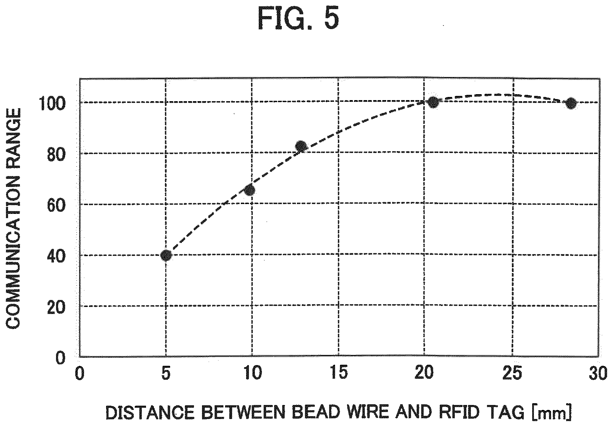

Herein, FIG. 5 shows the result of studying the relationship of the communication range relative to the separation distance between the bead core (bead wire) 21 and the RFID tag 40. It should be noted that the communication range on the vertical axis is obtained by indexing the communication range with the longest communication range as 100.

As shown in FIG. 5, the inventors of the present disclosure confirmed that the communication range became at least 60 (at least 60%) at a position distanced 10 mm from the bead core (bead wire), and confirmed that the communication range became 100 at a position distanced 20 mm.

Based on this, in the present embodiment, the RFID tag 40 is provided to be separated by at least 10 mm (separation of at least reference symbol L) to an outer side in the tire-radial direction from the bead core 21. In addition, upon providing the RFID tag 40 by separating to the upmost from the bead core 21, the RFID tag 40 is embedded within the bead filler 22 in the vicinity of the tire-radial direction outside end 22A. For example, by arranging the RFID tag 40 in the area range of 10 mm to the inner side in the tire-radial direction from the tire-radial direction outside end 22A of the bead filler 22, the influence on the communication of the bead core 21 can be sufficiently eliminated in a tire for various types of automobiles, etc., and it is made possible to ensure favorable communication performance.

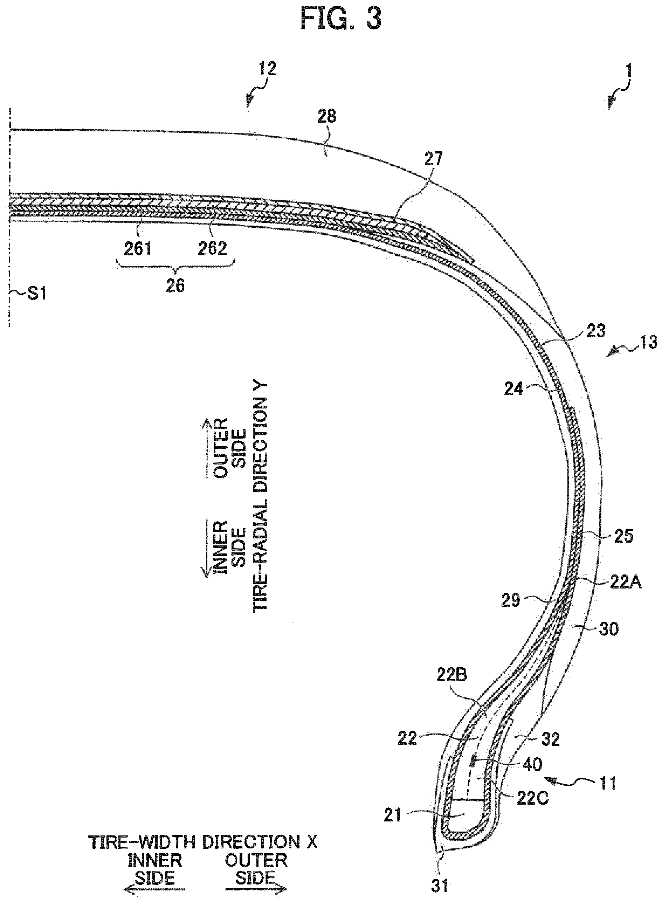

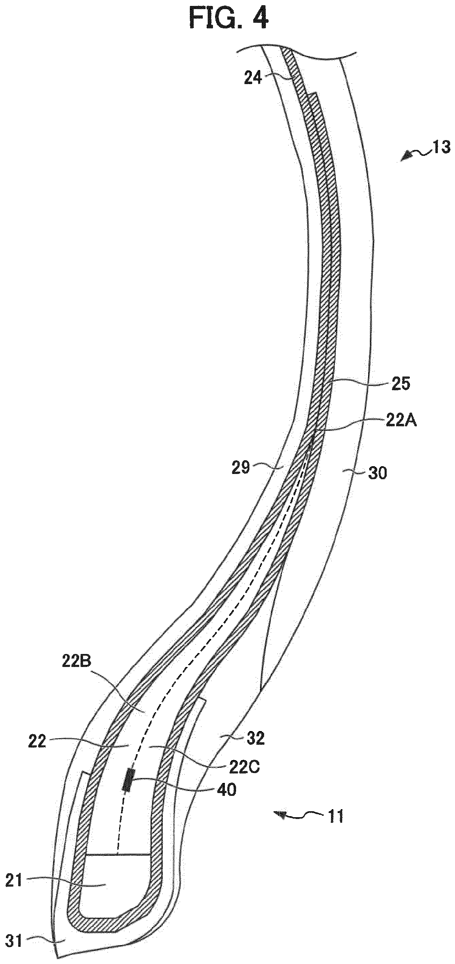

However, in the present invention, as shown in FIGS. 3 and 4, the RFID tag 40 may not necessarily be limited to being separated by at least 10 mm to the outer side in the tire-radial direction from the bead core 21 (separation of at least reference symbol L: refer to FIGS. 1 and 2).

On the other hand, in the manufacturing process of the tire 1 of the present embodiment, the RFID tag 40 is interposed by the one filler piece 22B and other filler piece 22C which are the same material of the bead filler 22 prior to the vulcanization step, and this bead filler 22 is mounted so as to be enveloped by the ply folding part 25 or ply body 24 of the carcass ply 23 prior to the coating rubber being vulcanized. Then, the green tire in which the respective constituent members including the RFID tag 40 are assembled is vulcanized in a vulcanization step to manufacture the tire.

In the present embodiment, since it is thereby possible to arrange the RFID tag 40 to be positioned at a predetermined position, while embedding inside of the bead filler 22 using the carcass ply 23 covered by raw rubber having rigidity and adhesiveness, the assembly work of the RFID tag 40 in the manufacturing process of the tire can be carried out easily.

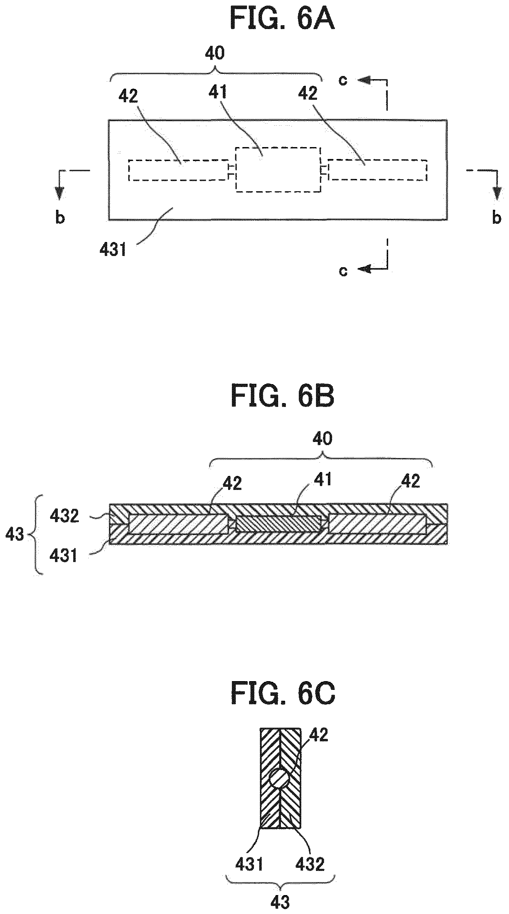

Herein, FIG. 6A is a view showing an example of the RFID tag 40 covered by the protective member 43 which is configured from a rubber sheet. In FIG. 6A, the RFID tag 40 is covered by a rubber sheet 431 described later to be hidden. FIG. 6B is a cross-sectional view along the line b-b in FIG. 6A, and FIG. 6C is a cross-sectional view along the line c-c in FIG. 6A.

In the present embodiment, as shown in FIG. 6, the RFID tag 40 is covered by the protective member 43.

The RFID tag 40 includes an RFID chip 41 and antenna 42 for performing communication with external equipment. As the antenna 42, a coil-shaped spring antenna, plate-shaped antenna, and various types of rod-shaped antennas can be used. For example, it may be an antenna formed by printing a predetermined pattern on a flexible substrate. When considering the communicability and flexibility, a coil-shaped spring antenna is the most preferable.

The protective member 43 is configured from two rubber sheets 431, 432 which protect by sandwiching the RFID tag 40.

The protective member 43 is configured by rubber of a predetermined modulus, for example. Herein, the modulus indicates 100% elongation modulus (M100) under a 23°C atmosphere, measured in accordance with "3.7 stress at a given elongation, S" of JIS K6251:2010.

As the rubber adopted in the protective member 43, rubber at least having a higher modulus than the side wall rubber 30 is used.

For example, with the modulus of the side wall rubber 30 as a reference, it is preferable to use rubber of a modulus 1.1 to 2 times as the rubber used in the protective member 43.

In addition, the protective member 43 may be configured from a short-fiber filler mixed rubber. As the short-fiber filler, for example, it is possible to use insulating short fibers like organic short fibers such as aramid short fibers and cellulose short fibers; inorganic short fibers such as ceramic short fibers as in alumina short fiber, and glass short fiber. By mixing such short-fiber fillers into rubber, it is possible to raise the strength of the rubber. In addition, as the protective member 43, a rubber sheet in the vulcanized state may be used. The rubber sheet in a vulcanized state does not plastically deform as raw rubber, and thus can appropriately protect the RFID tag 40. In addition, as the protective member 43, an organic fiber layer from polyester fibers or polyamide fibers may be provided. It is also possible to embed an organic fiber layer in the two rubber sheets 431, 432.

In this way, if configuring the protective member 43 by two rubber sheets, since it is possible to thinly form the RFID tag 40 including the protective member 43, it is favorable upon embedding to be interposed between the one filler piece 22B and other filler piece 22C. In addition, when assembling the RFID tag 40 in the constitutional members of the tires 1 to 3 prior to vulcanization, the RFID tag 40 covered by the rubber sheets can be installed very easily.

However, the protective member 43 is not limited to the form configured by two rubber sheets, and can adopt various forms. For example, the rubber sheet constituting the protective member, so long as covering at least part of the RFID tag 40, can obtain effects such as an improvement in workability in the manufacturing process and stress mitigation. In addition, for example, it may be a configuration wrapping one rubber sheet around the entire circumference of the RFID tag 40, or a configuration attaching the protective member in the form of a potting agent of high viscosity along the entire circumference of the RFID tag 40. Even if such a configuration, it will be possible to appropriately protect the RFID tag 40. It should be noted that the RFID tag 40 according to the present invention is not necessary configured to be covered by the protective member 43. In addition, the protective member 43 may be provided only to one side of the RFID tag 40.

In the case of providing the protective member 43 to only one side of the RFID tag 40, it is possible to make the overall thickness to be thin.

In the tire 1 of the present embodiment configured in the above-mentioned way, the RFID tag 40 is arranged at a position far from the metal bead core 21, and also far from the steel belt 26, and thus the RFID tag 40 hardly receives adverse effect from components made of metal, and it is possible to ensure more favorable communication performance.

In addition, with the RFID tag 40 of the present embodiment, by the movement being restricted by the fiber layer constituting the carcass ply 23, and additionally, by being embedded in the bead filler 22 having high modulus, it hardly receives influences such as distortion of the tire during travel. Consequently, it is possible to improve the durability of the RFID tag 40 by way of existing components, without using additional components.

Furthermore, according to the present embodiment, since the RFID tag 40 is provided within the bead filler 22 surrounded by the fiber layer constituting the carcass ply 23, since the distance from the outer wall surface of the tire 1 until the RFID tag 40 is far, and additionally, since embedding within the bead filler 22 of high modulus, the RFID tag 40 is protected even if shock acts on the side wall 13. In other words, the shock protection property of the RFID tag 40 can be sufficiently ensured.

It should be noted that the RFID tag 40 embedded in the tire, when including an antenna, often has a longitudinal direction. It is preferable for such an RFID tag 40 to be embedded in the tire 1, so that the longitudinal direction thereof is a direction of the tangential line to the circumferential direction of the tire, i.e. direction orthogonal to the paper plane in the cross-sectional views of FIGS. 1 and 2. By embedding in this way, stress is hardly applied to the RFID tag 40, when the tire deforms.

In addition, in the present embodiment, although the RFID tag 40 is embedded in the tire 1 as an electronic component, the electronic component embedded in the tire 1 is not limited to an RFID tag. For example, it may be various electronic components such as a sensor which carries out wireless communication. There is a possibility of the performance of the electronic component declining due to external shock or the influence of stress at the periphery. Consequently, even in the case of embedding various electronic components in a tire, it is possible to obtain the effects of the present invention. For example, the electronic component may be a piezoelectric element or strain sensor.

According to the tire 1 of the present embodiment, the following effects are exerted.
(1) In the tire 1 according to the present embodiment, the RFID tag 40 is interposed between the one filler piece 22B and other filler piece 22C in a form dividing the bead filler 22, and the RFID tag 40 is embedded inside of the bead filler 22. It is thereby possible to favorably embed the RFID tag 40 inside of the bead filler 22, by performing the vulcanization process in a state interposing the RFID tag 40 between the one filler piece 22B and other filler piece 22C during manufacturing. In addition, it is possible to protect the RFID tag 40 by existing components, without using additional components. In addition, since the bead filler 22 is also high modulus, movement of the RFID tag 40 is suppressed also by this bead filler 22, and the durability of the RFID tag 40 improves. Consequently, by providing inside of the bead filler 22, it becomes possible to favorably ensure the manufacturability and communication functionality, and embed the RFID tag 40 in the tire 1. It should be noted that the bead filler 22 becomes a form divided into plurality, and so long as the RFID tag 40 is fixedly set so as to be interposed between adjacent filler pieces, it will not be necessary to limit the number of divisions of the bead filler 22. It should be noted that, it is sufficient if the present invention is an embodiment in which the bead filler is formed from a plurality of filler pieces, and the electronic component is interposed between one filler piece and another filler piece, the plurality of filler pieces may be produced separately from each other.
(2) In the tire 1 according to the present embodiment, the RFID tag 40 is arranged at the outer side in the tire-radial direction separated at least 10 mm from the bead core 21. Since it is thereby possible to arrange the RFID tag 40 at a position distanced from metal components such as the bead core 21, the performance of the communication function, etc. of the RFID tag 40 can be maintained.
(3) In the tire 1 according to the present embodiment, the RFID tag 40 is embedded in the area range of 10 mm to the inner side in the tire-radial direction from the tire-radial direction outside end 22A of the bead filler 22. Since it is thereby possible to reliably arrange the RFID tag 40 at a position distanced from components made of metal such as the bead core 21, it is possible to maintain the performance such as the communication function of the RFID tag 40 more reliably.
(4) In the tire 1 according to the present embodiment, the RFID tag 40 covered by the rubber sheet is embedded. It is thereby possible to arrange the RFID tag 40 covered by the rubber sheet at a predetermined position by pasting using the adhesiveness of raw rubber. In addition, by also establishing the rubber sheets as raw rubber prior to vulcanization, it is possible to more easily paste by employing the adhesiveness of the rubber sheet itself as well. Furthermore, it becomes possible to protect the RFID tag 40 by the rubber sheets.
(5) In the tire 1 according to the present embodiment, the RFID tag 40 which is uncovered may be embedded. In this case, it becomes possible to reduce the manufacturing cost of the RFID tag 40, and consequently, the tire 1, and thus can be made more favorable.
(6) In the tire 1 according to the present embodiment, the RFID tag 40 is disposed so that a longitudinal direction thereof becomes a direction of a tangential line to the circumferential direction of the tire 1.

It should be noted that, although the tire of the present invention can be adopted as various types of tires such as for cars, light trucks, trucks and buses, it is particularly suitable as a tire for passenger cars. It should be noted that the present invention is not to be limited to the above-mentioned embodiments, the scope of the invention being defined by the appended claims.

### EXPLANATION OF REFERENCE NUMERALS

- 1: tire
- 11: bead
- 12: tread
- 13: side wall
- 21: bead core
- 22: bead filler
- 22A: tire-radial direction outside end of bead filler
- 22B: one filler piece
- 22C: other filler piece
- 23: carcass ply
- 24: ply body
- 25: ply folding part
- 26: steel belt
- 27: cap ply
- 28: tread rubber
- 29: inner liner
- 30: side-wall rubber
- 31: chafer
- 32: rim strip rubber
- 40: RFID tag
- 41: RFID chip
- 42: antenna
- 43: protective member
- 431, 432: rubber sheet

## Claims

1. A tire (1) comprising: a pair of beads (11) having a bead core (21) and a bead filler (22) which extends to an outer side in a tire-radial direction of the bead core (21); and
a carcass ply (23) which extends from one bead (11) to an other bead (11), and is folded back around the bead core (21),
wherein the bead filler (22) is formed by a plurality of filler pieces (22B, 22C), and an electronic component (40) is interposed between one filler piece (22B) and another filler piece (22C) which are adjacent, whereby the electronic component (40) is embedded inside of the bead filler (22);
**characterized in that**: the electronic component (40) is disposed to an outer side in a tire-radial direction separated by at least 10 mm from the bead core (21).

2. The tire (1) according to claim 1, wherein the electronic component (40) is embedded in an area range of 10 mm to an inner side in the tire-radial direction from a tire-radial direction outside end (22A) of the bead filler (22).

3. The tire (1) according to any one of claims 1 to 2, wherein the electronic component (40) which has been covered by a rubber sheet (431, 432) is embedded.

4. The tire (1) according to any one of claims 1 to 2, wherein the electronic component (40) without covering is embedded.

5. The tire according to claim 1, wherein the electronic component (40) is disposed so that a longitudinal direction thereof becomes a direction of a tangential line to the circumferential direction of the tire (1).

## Patentansprüche

1. Reifen (1), umfassend: ein Paar Wulste (11) mit einem Wulstkern (21) und einem Wulstfüller bzw. Kernreiter (22), der sich zu einer Außenseite in einer Reifenradialrichtung des Wulstkerns (21) erstreckt; und
eine Karkassenlage (23), die sich von einer Wulst (11) zu einer anderen Wulst (11) erstreckt und um den Wulstkern (21) zurückgefaltet bzw. -geklappt ist; wobei der Wulstfüller (22) durch eine Mehrzahl von Füllerstücken (22B, 22C) gebildet ist und eine elektronische Komponente (40) zwischen einem Füllerstück (22B) und einem anderen Füllerstück (22C) angeordnet ist, die benachbart bzw. angrenzend sind, wobei die elektronische Komponente (40) in den Wulstfüller (22) eingebettet ist;
**dadurch gekennzeichnet**: die elektronische Komponente (40) an einer Außenseite bzw. zu einer Außenseite hin in einer Reifenradialrichtung angeordnet ist, die zumindest 10 mm von dem Wulstkern (21) beabstandet ist.

2. Reifen (1) nach Anspruch 1, wobei die elektronische Komponente (40) in einen Flächenbereich von 10 mm zu einer Innenseite in der Reifenradialrichtung von einem Reifenradialrichtung-Außenende (22A) des Wulstfüllers (22) eingebettet ist.

3. Reifen (1) nach einem der Ansprüche 1 bis 2, wobei die elektronische Komponente (40), die mit einer Gummischicht (431, 432) bedeckt wurde, eingebettet ist.

4. Reifen (1) nach einem der Ansprüche 1 bis 2, wobei die elektronische Komponente (40) ohne Abdeckung eingebettet ist.

5. Reifen nach Anspruch 1, wobei die elektronische Komponente (40) so angeordnet ist, dass eine Längsrichtung davon eine Richtung einer Tangentiallinie zu der Umfangsrichtung des Reifens (1) wird.

## Revendications

1. Pneu (1) comprenant : une paire de talons (11) ayant une tringle (21) et un bourrage sur tringle (22) qui s'étend vers un côté externe dans une direction radiale de pneu de la tringle (21) ; et
un pli de carcasse (23) qui s'étend d'un talon (11) à un autre talon (11) et est replié autour de la tringle (21),
dans lequel le bourrage sur tringle (22) est formé d'une pluralité de pièces de bourrage (22B, 22C), et un composant électronique (40) est interposé entre une pièce de bourrage (22B) et une autre pièce de bourrage (22C) qui sont adjacentes, moyennant quoi le composant électronique (40) est incorporé à l'intérieur du bourrage sur tringle (22) ;
**caractérisé en ce que** : le composant électronique (40) est disposé sur un côté externe dans une direction radiale de pneu séparé d'au moins 10 mm de la tringle (21).

2. Pneu (1) selon la revendication 1, dans lequel le composant électronique (40) est incorporé dans une plage de zone de 10 mm par rapport à un côté interne dans la direction radiale de pneu depuis une extrémité extérieure (22A) dans la direction radiale de pneu du bourrage sur tringle (22).

3. Pneu (1) selon l'une quelconque des revendications 1 à 2, dans lequel le composant électronique (40) qui a été recouvert d'une feuille de caoutchouc (431, 432) est incorporé.

4. Pneu (1) selon l'une quelconque des revendications 1 à 2, dans lequel le composant électronique (40) sans recouvrement est incorporé.

5. Pneu selon la revendication 1, dans lequel le composant électronique (40) est disposé de sorte qu'une direction longitudinale de celui-ci devient une direction d'une ligne tangente à la direction circonférentielle du pneu (1).
